# EUROPEAN PATENT SPECIFICATION

(11) **EP 2 905 826 B1**
(45) Date of publication and mention of the grant of the patent: **01.03.2017**
(21) Application number: 14178826.5
(22) Date of filing: 28.07.2014
(51) Int. Cl.: H01M 2/20, H01M 2/30, B23K 26/20, B23K 31/02, B23K 101/38

(54) **BATTERY MODULE AND METHOD OF MANUFACTURING THE SAME**
BATTERIEMODUL UND HERSTELLUNGSVERFAHREN DAFÜR
MODULE DE BATTERIE ET PROCÉDÉ DE FABRICATION DE CELUI-CI

(30) Priority: 07.02.2014 KR 20140014186
(43) Date of publication of application: 12.08.2015
(73) Proprietor: Samsung SDI Co., Ltd., Yongin-si, Gyeonggi-do (KR)
(72) Inventor: Jeong, Ik-Jae, Gyeonggi-do (KR); Bae, Min-Cheol, Gyeonggi-do (KR); Lee, Ji-Ho, Gyeonggi-do (KR); Choi, Hong-Keun, Gyeonggi-do (KR); Noh, Kyoung-Hwan, Gyeonggi-do (KR)
(74) Representative: Mounteney, Simon James

(56) References cited:
- US-A1- 2012 055 909
- US-A1- 2013 269 978
- US-A1- 2013 344 378

## Description

### BACKGROUND

### 1. Field

The present invention relates to a battery module and a method of manufacturing the same.

### 2. Description of the Related Art

A high-power battery module using a non-aqueous electrolyte with high energy density has recently been developed. The high-power battery module is configured as a high-voltage or large-capacity battery module manufactured by connecting a plurality of battery cells in parallel or series so as to be used in driving motors of devices requiring high power, e.g., electric vehicles and the like. Further, a battery pack can be configured by electrically connecting such a plurality of battery modules to one another.

As the number of devices employing such a battery module increases, studies have been conducted to improve the productivity of the battery module. As the external appearance of the devices is diversified, it is required to vary the shape of the battery module. However, the safety of the battery module should be basically secured. Therefore, studies on the structure of a battery module capable of satisfying all the requirements have been conducted in various fields.

US 2013/0344378 discloses a battery module having bus bars connecting external terminals of adjacent cells. A connecting member is welded by laser to the external terminal and the bus bar, and the bus bar includes openings corresponding to the external terminals.

US 2013/0269978 also discloses a battery module having bus bars with openings corresponding to external terminals of cells, wherein the bus bars are welded to the external terminals.

US 2012/0055909 discloses a method of laser welding portions of a battery by roughening surfaces to form a laser marker prior to a welding step.

### SUMMARY

The present invention sets out to provide a battery module and a method of manufacturing the same that can improve electrical safety when battery cells are connected through a bus-bar.

The present invention provides a battery module according to claim 1.

The opening of the bus-bar may have a stepped shape.

The opening of the bus-bar may include a first opening, and a second opening configured to communicate with the first opening while being positioned adjacent to the terminal portion, the second opening having a diameter greater than that of the first opening.

The reflective portion may be positioned in the second opening.

At least one outer surface of the reflective portion may be contacted with an inner wall of the second opening.

The reflective portion may include a first reflective portion configured to include at least one inclination surface, the first reflective portion reflecting, on the inclination surface, the laser incident into the bus-bar through the opening, to be guide between the bus-bar and the terminal portion, and a second reflective portion positioned between the first reflective portion and the terminal portion so that at least one outer surface of the second reflective portion is contacted with the inner wall of the second opening.

An unevenness may be formed on the exposed surface of the second reflective portion.

The reflective portion may include at least one inclination surface.

The laser incident into the bus-bar through the opening may be reflected on the inclination surface to weld between the bus-bar and the terminal portion.

At least one portion of the reflective portion may be melted by the laser to be interposed between the bus-bar and the terminal portion.

An unevenness may be formed on the inner wall of the bus-bar.

An unevenness may be formed on the exposed surface of the terminal portion.

The section of the reflective portion may have a triangular, trapezoid or curved surface shape.

According to another aspect of the present invention, there is provided a method of manufacturing a battery module according to claim 12.

At least some of the above and other features of the invention are set out in the claims.

Other features and advantages of the present invention will become more fully apparent from the following detailed description, taken in conjunction with the accompanying drawings.

In the battery module and the method of manufacturing the same according to the present invention, the welding portion between the bus-bar and the terminal portion can be firmly formed without being directly exposed to the outside of the bus-bar, thereby improving electrical safety according to the connection of the bus-bar.

### BRIEF DESCRIPTION OF THE DRAWINGS

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a battery module according to an embodiment of the present invention.
FIG. 2 is an exploded perspective view of the battery module shown in FIG. 1.
FIGS. 3 and 4 are sectional views of battery modules compared with the battery module shown in FIG. 1.
FIG. 5 is a sectional view taken along line A-A' of the battery module shown in FIG. 1.
FIG. 6 is a sectional view showing various shapes of a reflective portion of the battery module shown in FIG. 5.
FIG. 7 is a sectional view of a battery module according to a modification of the battery module shown in FIG. 5.
FIG. 8 is a sectional view of a battery module according to another embodiment of the present invention.
FIG. 9 is a sectional view of a battery module according to still another embodiment of the present invention.
FIG. 10 is a flowchart illustrating a method of manufacturing a battery module according to an embodiment of the present invention.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

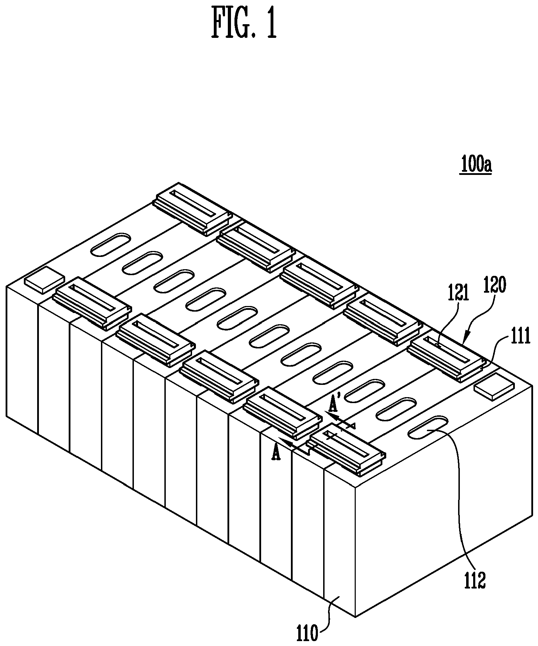

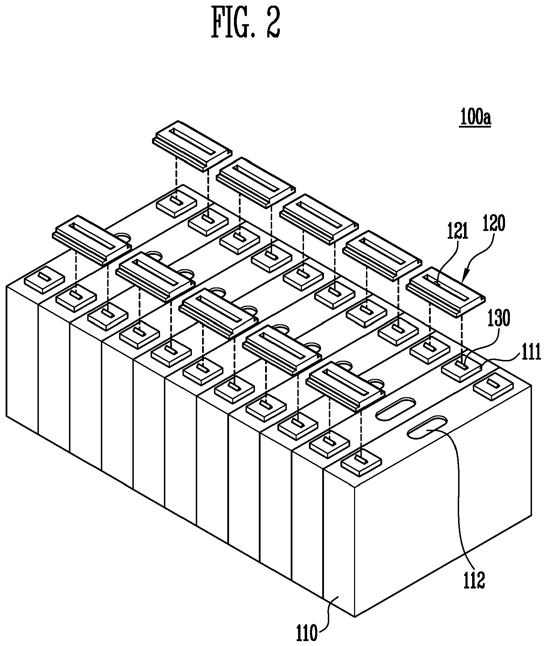

FIG. 1 is a perspective view of a battery module 100a according to an embodiment of the present invention. FIG. 2 is an exploded perspective view of the battery module 100a shown in FIG. 1. Hereinafter, the battery module 100a according to this embodiment will be described with reference to FIGS. 1 and 2.

As shown in FIGS. 1 and 2, the battery module 100a according to this embodiment includes a plurality of battery cells 110, bus-bars 120 configured to electrically connect between the battery cells 110, and a respective reflective portion 130 positioned at a terminal portion 111 of each of the battery cells 110.

Each battery cell 110 includes a battery case of which one surface is opened, and an electrode assembly and an electrolyte, which are accommodated in the battery case. In this case, the electrode assembly and the electrolyte may generate energy through an electrochemical reaction therebetween. The open surface of the battery case is hermetically sealed by a cap assembly. In addition, terminal portions 111 having different polarities, i.e., positive and negative electrode terminals are provided to protrude from the cap plate. A vent portion 112 acting as a passage through which gas generated inside the battery cell 110 is exhausted to the outside of the battery cell 110 is further provided in the cap plate as a safety means of the battery cell 110.

The plurality of battery cells 110 are aligned in one direction. When the battery cells 110 are connected in series, the battery cells 110 are aligned so that the polarities of the terminal portions 111 of the battery cell 110 are different from each other. When the battery cells 110 are connected in parallel, the battery cells 110 may be aligned so that the polarities of the terminal portions 111 of the battery cell 110 are identical to each other.

Each bus-bar 120 is a member which electrically connects between two of the plurality of battery cells 110. The bus-bar 120 may be welded to the terminal portions 111 of the battery cell 110. Here, the bus-bar 120 connects between the terminal portions 111 of adjacent battery cells 110 among the plurality of battery cells 110, thereby implementing the serial or parallel electrical connection between the battery cells 110. The bus-bar 120 may be welded to the terminal portions 111. To facilitate this, an opening 121 is formed in the bus-bar 120 so that laser used in the welding can be incident between the bus-bar 120 and the terminal portion 111.

Meanwhile, although not shown in these figures, a housing, a plate and the like, for fixing or accommodating the plurality of battery cells may be further added.

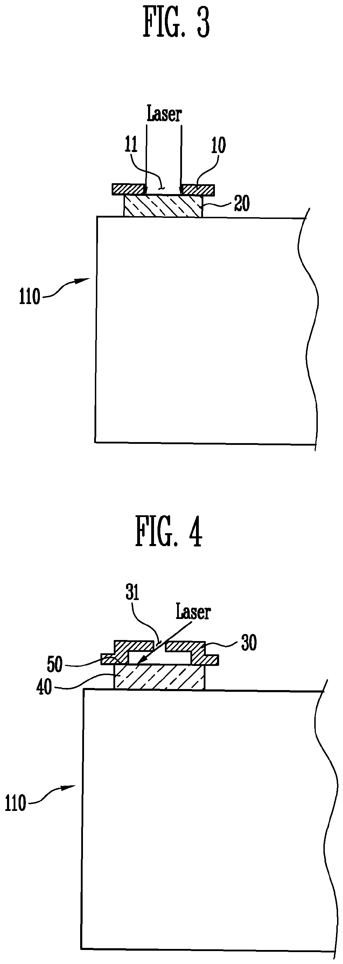

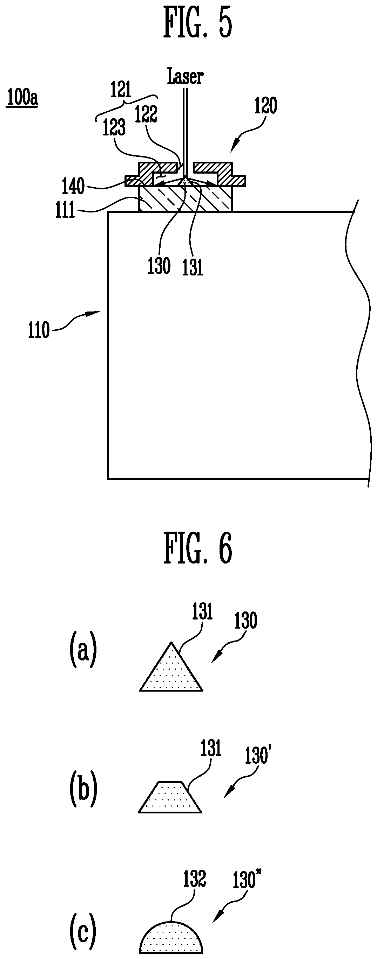

FIGS. 3 and 4 are sectional views of battery modules compared with the battery module 100a shown in FIG. 1. FIG. 5 is a sectional view taken along line A-A' of the battery module 100a shown in FIG. 1. FIG. 6 is a sectional view showing various shapes of the reflective portion 130 of the battery module 100a shown in FIG. 5. Hereinafter, the reflective portion 130 of the battery module 100a according to this embodiment will be described with reference to FIGS. 3 to 6.

As described above, an opening is formed in the bus-bar so that laser used in the welding can be directed into the bus-bar therethrough. In the case of the bus-bar 10 shown in FIG. 3, the laser is irradiated through an opening 11, in order \to be guided between the bus-bar 10 and a terminal portion 20. However, in such a structure, a welding portion is directly exposed to the outside of the bus-bar 10 . Hence, this may not be preferable in terms of safety.

A bus-bar 30 with a structure shown in FIG. 4 may be considered as a plan for solving such a problem. However, in a case where the opening 31 of the bus-bar 30 has a stepped shape, as shown in the structure of FIG. 4, it may be difficult to accurately guide laser between an inner wall of the opening 31 and a terminal portion 40, i.e., to a welding portion 50. Although the laser is diagonally aimed, the laser reaches a place not to be welded as shown in FIG. 4, and therefore, a portion of the bus-bar 30 outside the welding portion 50 may be damaged. This may not be preferable in terms of electrical safety.

In the present invention, as shown in FIG. 5, a reflective portion 130 is placed on the terminal portion 111 so that laser is transferred to a welding portion 140 through the reflection portion 130, thereby solving such a problem. Specifically, the reflective portion 130 has at least one inclination surface 131, and the laser incident into the bus-bar 120 through the opening 121 is reflected on the inclination surface 131, to be guided to the interface between the bus-bar 120 and the terminal portion 111, i.e., to the welding portion 140.

In this case, the opening 121 has a stepped shape. More specifically, the opening 121 includes a first opening 122 that is positioned relatively distant from the terminal portion 111, and a second opening 123 that is configured to communicate with the first opening 122 while being positioned relatively adjacent to the terminal portion 111. The second opening 123 has a diameter greater than that of the first opening 122.

The reflective portion may be made of any reflective material suitable for a reflective portion appreciated by those skilled in the art, including silver, aluminum, copper, or a mirror material, the mirror having a glass layer and a metal layer coated on the glass layer.

The reflective portion 130 is positioned inside the second opening 123 and reflects the laser so that at least one portion of the laser can be transferred to the point at which an inner wall defined by the second opening 123 and the terminal portion 111 meet each other. Accordingly, the terminal portion 111 and the bus-bar 120 are stably welded to each other, and simultaneously, the welding portion 140 is not directly exposed to the outside of the bus-bar 120, thereby improving electrical safety. Furthermore, because the first opening 122 is smaller than the second opening 123, the welding portion 140 receives relatively less influence from the outside.

The reflective portion 130 is positioned on the terminal portion 111 in a place exposed through the opening 121. This may mean that when being straightly viewed through the opening 121, the reflective portion 130 is necessarily viewed. Otherwise, the laser cannot be directly focused on the reflective portion 130. For example, the reflective portion 130 may be positioned directly below the first opening 122, so that the laser can be irradiated onto the inclination surface 131 of the reflective portion 130. Consequently, a portion of the reflective portion 130 may be melted by the irradiation of the laser, and the melted portion may enter between the bus-bar 120 and the terminal portion 111 to become a portion of the welding portion 140. However, the present invention is not limited thereto, and the reflective portion 130 may be made of a material which is not melted by the laser. In addition, it will be apparent that when the welding portion 140 is melted, the shape of the reflective portion 130 may be changed from the original shape.

The reflective portion 130 may be formed in various shapes as shown in FIG. 6. Specifically, as shown in FIG. 6(a), a section of the reflective portion 130 may be formed in the shape of a triangle having at least one inclination surface 131. Alternatively, as shown in FIG. 6(b), a section of the reflective portion 130' may be formed in the shape of a trapezoid having at least one inclination surface 131. Alternatively, as shown in FIG. 6(c), a section of the reflective portion 130" may be formed in the shape of a semicircle having a curved surface 132. However, the present invention is not limited to these specific shapes, and it includes all shapes at which the laser incident into the bus-bar 120 through the opening 121 can be reflected. The reflectivity of the reflective portion 130 may be 80% or more.

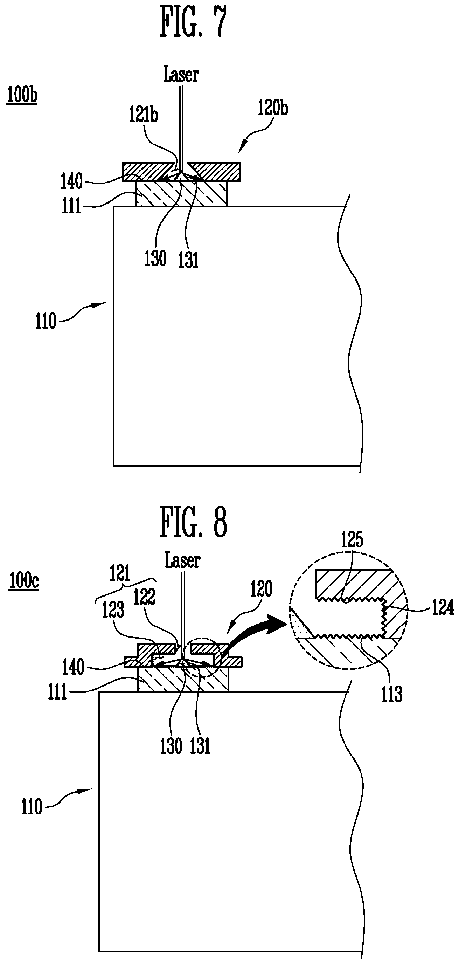

FIG. 7 is a sectional view of a battery module 100b according to a modification of the battery module 100a shown in FIG. 5. Hereinafter, the battery module 100b according to this embodiment will be described with reference to FIG. 7.

In case of the bus-bar 120b shown in FIG. 7, an opening 121b is provided that has a shape in which the diameter of the opening 121b narrows with distance from the terminal portion 111. Accordingly, the welding portion 140 is protected from exposure to the outside, thereby improving electrical safety. In a case where laser is irradiated to weld the bus-bar 120b and the terminal portion 111, the irradiated laser is reflected by the reflective portion 130, so that at least one portion of the laser can be guided to the junction between the bus-bar 120 and the terminal portion 111. Thus, it is possible to conveniently perform the process of welding between the bus-bar 120b and the terminal portion 111 and to improve the electrical safety.

FIG. 8 is a sectional view of a battery module 100c according to another embodiment of the present invention. Hereinafter, the battery module 100c according to the present invention will be described with reference to FIG. 8. Here, components identical to those of the aforementioned embodiment are designated by like reference numerals, and their detailed descriptions will be omitted to avoid redundancy.

As shown in FIG. 8, the battery module 100c according to this embodiment includes the battery cell 110, the bus-bar 120 and the reflective portion 130. In this case, texture113 and 124 is formed on at least one of an inner wall of the bus-bar 120 and a top surface of the terminal portion 111.

In a case where the reflective portion 130 is included as described above, a portion of the laser may be guided to a point to be welded. However, the amount of the laser guided to the point to be welded may not be initially sufficient due to an error of the angle of the inclination surface 131 or the irradiation angle of the laser, or the amount of the laser guided to the point to be welded may degenerate due to a change in the angle of the inclination surface 131 while the reflective portion 130 is being melted by the laser. In this case, if diffused reflection is produced around the point to be welded, the amount of the laser guided to the point to be welded can be increased. In this embodiment, the texture 113 and 124 is formed on the inner wall of the opening 121 of the bus-bar 120 and/or the top surface of the terminal portion 111 in order to produce the diffused reflection.

Specifically, the texture 124 is formed on the inner wall of the second opening 123 of the bus-bar 120 and a stepped surface 125 of the second opening 123, and/or the texture 113 is formed on the top surface of the terminal portion 111 except the point at which the reflective portion 130 is positioned. Accordingly, if the laser reflected by the reflective portion 130 is not exactly guided to the point to be welded, the laser can be gradually guided to the welding portion 140 through being diffusely reflected in an inner space of the second opening 123. Thus, it is possible to conveniently perform the process of welding between the bus-bar 120 and the terminal portion 111. Further, the welding portion 140 can be firmly formed, thereby improving the electrical safety according to the connection of the bus-bar 120.

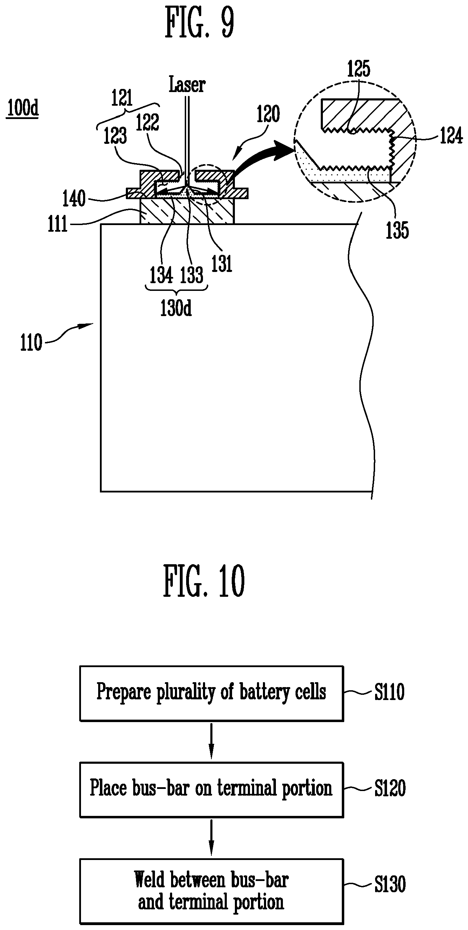

FIG. 9 is a sectional view of a battery module 100d according to still another embodiment of the present invention. Hereinafter, the battery module 100d according to the present invention will be described with reference to FIG. 9. Here, components identical to those of the aforementioned embodiment are designated by like reference numerals, and their detailed descriptions will be omitted to avoid redundancy.

As shown in FIG. 9, the battery module 100d according to this embodiment includes the battery cell 110, the bus-bar 120 and a reflective portion 130d. In this case, a surface of the reflective portion 130d contacts a wall of the second opening 123. Specifically, the reflective portion 130d includes a first reflective portion 133 and a second reflective portion 134. Here, the first reflective portion 133 includes at least one inclination surface 131, and reflects, via the inclination surface 131, laser directed into the bus-bar 120 through the opening 121, to an interface between the bus-bar 120 and the terminal portion 111. The second reflective portion 134 is positioned between the first reflective portion 133 and the terminal portion 111 so that a surface of the second reflective portion 134 is in contact with a wall of the second opening 123.

In this embodiment, the second reflective portion 134 locates against a laterally inner wall of the second opening 123, but the invention is not limited in this regard.

Accordingly, the bus-bar 120 is mounted so that the outer surface of the second reflective portion 134 contacts the wall of the second opening 123, thereby facilitating the aligning process of the bus-bar 120. In addition, a portion of the second reflective portion 134 proximal the interface between the bus-bar 120 and the terminal portion 111, i.e., the point to be welded, may be melted by the laser and then enter between the bus-bar 120 and the terminal portion 111, to become a portion of the welding portion 140. Thus, the welding portion 140 can be more firmly formed, thereby further improving the electrical safety according to the connection of the bus-bar 120.

As described in relation to the preceding embodiment, a texture 124 is formed on the inner wall of the second opening 123 and the stepped surface 125 of the second opening 123 in order to produce diffused reflection. Furthermore, a texture 135 is formed on a top surface of the second reflective portion 134 in order to maximize the diffused reflection. In this case, the texture 135 is formed on the top surface of the second reflective portion 134 except where it is connected to the first reflective portion 133.

FIG. 10 is a flowchart illustrating a method of manufacturing a battery module according to an embodiment of the present invention. Hereinafter, the method according to this embodiment will be described with reference to FIG. 10.

In order to manufacture the battery module according to this embodiment, a plurality of battery cells 110 are first prepared (S110). In this case, the battery cells 110 may be prepared in an aligned state, and a reflective portion 130 is positioned on a top surface of a terminal portion 111 of each battery cell 110.

Next, bus-bars 120 for electrically connecting between the plurality of battery cells 110 are positioned on the terminal portions 111 (S120). The bus-bar 120 are disposed in accordance with whether a serial or parallel connection is required between the battery cells 110.

Next, the bus-bar 120 and the terminal portion 111 are welded to each other (S130). In this case, a laser beam is directed through an opening 121 of each bus-bar 120 and reflected within the bus bar by the reflective portion 130. The laser reflected by the reflective portion 130 is guided to the point at which the bus-bar 120 and the terminal portion 111 meet each other so that the bus-bar 120 can be welded to the terminal portion 111.

The battery module can be manufactured by the method described above, and it will be understood by those skilled in the art that the battery module may be variously modified by adding the texture, changing the shape of the reflective portion, or the like.

Embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module (100a), comprising:
a plurality of battery cells (110), each provided with a terminal portion;
a bus-bar (120) coupled to the terminal portions (111) in order to electrically connect between the plurality of battery cells, the bus-bar having an opening formed therein; and
a reflective portion (130) positioned on one of the terminal portions so that a light-reflective surface (131) of the reflective portion is exposed through the opening;
**characterised in that** the light-reflective surface (131) is at least partially adapted to direct light towards a welding portion (140) at which the bus-bar (120) is coupled to the terminal portion, and **in that** the opening of the bus-bar has a shape in which the size of the opening narrows with distance from the terminal portion such that the welding portion (140) is not directly exposed to the outside of the bus bar (120).

2. A battery module according to claim 1, wherein the opening of the bus-bar has a stepped shape.

3. A battery module according to claim 2, wherein the opening of the bus-bar includes a first opening and a second opening configured to communicate with the first opening while being positioned adjacent to the terminal portion, the second opening having a diameter greater than that of the first opening.

4. A battery module according to claim 3, wherein the reflective portion is positioned in the second opening.

5. A battery module according to claim 3 or 4, wherein at least one surface of the reflective portion contacts a wall of the second opening.

6. A battery module according to claim 5, wherein the reflective portion includes a first reflective portion comprising the said light-reflective surface and a second reflective portion positioned between the first reflective portion and the terminal portion, so that at least one surface of the second reflective portion contacts a wall of the second opening.

7. A battery module according to claim 6, wherein a texture is formed on the second reflective portion.

8. A battery module according to any preceding claim, wherein light-reflective surface includes at least one inclined part.

9. A battery module according to any preceding claim, wherein a texture is formed on an inner wall of the bus-bar.

10. A battery module according to any preceding claim, wherein a texture is formed on an exposed surface of the terminal portion.

11. A battery module according to any preceding claim, wherein at least a part of the reflective portion (130) has a triangular, trapezoid or curved surface shape.

12. A method of manufacturing a battery module, the method comprising:
providing a plurality of battery cells (110), at least one of which has a terminal portion comprising a reflective portion (130) on a surface thereof;
placing a bus-bar (120) for electrically connecting between the plurality of battery cells on the terminal portion of the battery cell, the said bus bar having an opening formed therein, wherein the opening has a shape in which the size of the opening narrows with distance from the terminal portion such that a welding portion (140) at which the bus bar (120) contacts the terminal portion is not exposed to the outside of the bus bar;
applying laser light to the reflective portion via the said opening; and
forming a weld between the bus-bar and the said terminal portion at the welding portion using laser light reflected from a light-reflective surface (131) of the said reflective portion (130), wherein the irradiated laser is reflected on the light reflective surface (131) so that at least one portion of the laser is guided to a the welding portion (140)

13. A method according to claim 12, wherein at least a portion of the reflective portion (130) is melted by the laser so as to be interposed between the bus-bar (120) and the terminal portion.

## Patentansprüche

1. Batteriemodul (100a), umfassend:
eine Vielzahl von Batteriezellen (110), wobei jede mit einem Anschlussabschnitt versehen ist;
eine Sammelschiene (120), die mit den Anschlussabschnitten (111) verbunden ist, um zwischen der Vielzahl von Batteriezellen elektrisch zu verbinden, wobei die Sammelschiene eine darin ausgebildete Öffnung hat; und
einen reflektierenden Abschnitt (130), der so auf einem der Anschlussabschnitte angeordnet ist, dass eine Licht reflektierende Oberfläche (131) des reflektierenden Abschnitts durch die Öffnung exponiert wird;
**dadurch gekennzeichnet, dass** die Licht reflektierende Oberfläche (131) zumindest teilweise dafür eingerichtet ist, Licht auf einen Schweißabschnitt (140) zu richten, an dem die Sammelschiene (120) mit dem Anschlussabschnitt gekoppelt ist, und dadurch, dass die Öffnung der Sammelschiene eine Form hat, bei der die Größe der Öffnung sich mit dem Abstand vom Anschlussabschnitt verschmälert, sodass der Schweißabschnitt (140) nicht direkt zum Äußeren der Sammelschiene (120) hin exponiert ist.

2. Batteriemodul nach Anspruch 1, worin die Öffnung der Sammelschiene eine abgestufte Form hat.

3. Batteriemodul nach Anspruch 2, worin die Öffnung der Sammelschiene aufweist: eine erste Öffnung und eine zweite Öffnung, die dafür konfiguriert ist, mit der ersten Öffnung zu kommunizieren, während sie angrenzend an den Anschlussabschnitt angeordnet ist, wobei die zweite Öffnung einen Durchmesser hat, der größer als jener der ersten Öffnung ist.

4. Batteriemodul nach Anspruch 3, worin der reflektierende Abschnitt in der zweiten Öffnung angeordnet ist.

5. Batteriemodul nach Anspruch 3 oder 4, worin mindestens eine Oberfläche des reflektierenden Abschnitts eine Wand der zweiten Öffnung berührt.

6. Batteriemodul nach Anspruch 5, worin der reflektierende Abschnitt aufweist: einen ersten reflektierenden Abschnitt, der die Licht reflektierende Oberfläche umfasst, und einen zweiten reflektierenden Abschnitt, der zwischen dem ersten reflektierenden Abschnitt und dem Anschlussabschnitt angeordnet ist, sodass mindestens eine Oberfläche des zweiten reflektierenden Abschnitts eine Wand der zweiten Öffnung berührt.

7. Batteriemodul nach Anspruch 6, worin auf dem zweiten reflektierenden Abschnitt eine Textur ausgebildet ist.

8. Batteriemodul nach einem der vorhergehenden Ansprüche, worin die Licht reflektierende Oberfläche mindestens einen geneigten Teil aufweist.

9. Batteriemodul nach einem der vorhergehenden Ansprüche, worin auf einer inneren Wand der Sammelschiene eine Textur ausgebildet ist.

10. Batteriemodul nach einem der vorhergehenden Ansprüche, worin auf einer exponierten Oberfläche des Anschlussabschnitts eine Textur ausgebildet ist.

11. Batteriemodul nach einem der vorhergehenden Ansprüche, worin zumindest ein Teil des reflektierenden Abschnitts (130) eine dreieckige, trapezförmige oder gekrümmte Oberflächenform hat.

12. Verfahren zum Herstellen eines Batteriemoduls, wobei das Verfahren umfasst:
Bereitstellen einer Vielzahl von Batteriezellen (110), wobei mindestens eine davon einen Anschlussabschnitt hat, der auf einer Oberfläche desselben einen reflektierenden Abschnitt (130) hat;
Platzieren einer Sammelschiene (120) zum elektrischen Verbinden zwischen der Vielzahl von Batteriezellen auf dem Anschlussabschnitt der Batteriezelle, wobei die Sammelschiene eine darin ausgebildete Öffnung hat, worin die Öffnung eine Form hat, bei der die Größe der Öffnung sich mit dem Abstand vom Anschlussabschnitt verschmälert, sodass ein Schweißabschnitt (140), an dem die Sammelschiene (120) den Anschlussabschnitt berührt, nicht zum Äußeren der Sammelschiene hin exponiert ist;
Anwenden von Laserlicht auf den reflektierenden Abschnitt durch die Öffnung; und
Ausbilden einer Verschweißung zwischen der Sammelschiene und dem Anschlussabschnitt am Schweißabschnitt, und zwar unter Verwendung von Laserlicht, das von einer Licht reflektierenden Oberfläche (131) des reflektierenden Abschnitts (130) reflektiert wird, worin das eingestrahlte Laserlicht so auf der Licht reflektierenden Oberfläche (131) reflektiert wird, sodass zumindest ein Anteil des Laserlichts zum Schweißabschnitt (140) gelenkt wird.

13. Verfahren nach Anspruch 12, worin zumindest ein Abschnitt des reflektierenden Abschnitts (130) durch das Laserlicht aufgeschmolzen wird, um dadurch zwischen die Sammelschiene (120) und den Anschlussabschnitt eingefügt zu werden.

## Revendications

1. Module de batterie (100a), comprenant :
une pluralité de cellules de batterie (110), chacune dotée d'une partie de borne ;
une barre omnibus (120) couplée aux parties de borne (111) afin d'assurer une connexion électrique entre la pluralité de cellules de batterie, la barre omnibus étant pourvue d'une ouverture ; et
une partie réfléchissante (130) disposée sur l'une des parties de borne de manière qu'une surface réfléchissant la lumière (131) de la partie réfléchissante soit exposée à travers l'ouverture ;
**caractérisé en ce que** la surface réfléchissant la lumière (131) est au moins partiellement adaptée pour diriger la lumière vers une partie de soudure (140) au niveau de laquelle la barre omnibus (120) est couplée à la partie de borne, et **en ce que** l'ouverture de la barre omnibus présente une forme selon laquelle la taille de l'ouverture diminue au fur et à mesure qu'elle s'éloigne de la partie de borne, si bien que la partie de soudure (140) n'est pas directement exposée à l'environnement extérieur de la barre omnibus (120).

2. Module de batterie selon la revendication 1, dans lequel l'ouverture de la barre omnibus présente une forme étagée.

3. Module de batterie selon la revendication 2, dans lequel l'ouverture de la barre omnibus comprend une première ouverture et une deuxième ouverture configurée pour communiquer avec la première ouverture en étant disposée de façon adjacente à la partie de borne, la deuxième ouverture présentant un diamètre supérieur à celui de la première ouverture.

4. Module de batterie selon la revendication 3, dans lequel la partie réfléchissante est disposée dans la deuxième ouverture.

5. Module de batterie selon la revendication 3 ou 4, dans lequel au moins une surface de la partie réfléchissante touche une paroi de la deuxième ouverture.

6. Module de batterie selon la revendication 5, dans lequel la partie réfléchissante comprend une première partie réfléchissante comprenant ladite surface réfléchissant la lumière et une deuxième partie réfléchissante disposée entre la première partie réfléchissante et la partie de borne, si bien qu'au moins une surface de la deuxième partie réfléchissante touche une paroi de la deuxième ouverture.

7. Module de batterie selon la revendication 6, dans lequel une texture est créée sur la deuxième partie réfléchissante.

8. Module de batterie selon l'une quelconque des revendications précédentes, dans lequel la surface réfléchissant la lumière comporte au moins une section inclinée.

9. Module de batterie selon l'une quelconque des revendications précédentes, dans lequel une texture est créée sur une paroi intérieure de la barre omnibus.

10. Module de batterie selon l'une quelconque des revendications précédentes, dans lequel une texture est créée sur une surface exposée de la partie de borne.

11. Module de batterie selon l'une quelconque des revendications précédentes, dans lequel au moins une partie de la partie réfléchissante (130) présente une forme de surface triangulaire, trapézoïdale ou incurvée.

12. Procédé de fabrication d'un module de batterie, le procédé comprenant :
la disposition d'une pluralité de cellules de batterie (110) dont l'une au moins présente une partie de borne comprenant une partie réfléchissante (130) sur une de ses surfaces,
la mise en place d'une barre omnibus (120), assurant une connexion électrique entre la pluralité de cellules de batterie, sur la partie de borne de la cellule de batterie, ladite barre omnibus étant pourvue d'une ouverture, ladite ouverture présentant une forme selon laquelle la taille de l'ouverture diminue au fur et à mesure qu'elle s'éloigne de la partie de borne, si bien qu'une partie de soudure (140) au niveau de laquelle la barre omnibus (120) est en contact avec la partie de borne n'est pas exposée à l'environnement extérieur de la barre omnibus,
l'application de lumière laser sur la partie réfléchissante à travers ladite ouverture, et
la formation d'une soudure entre la barre omnibus et ladite partie de borne au niveau de la partie de soudure au moyen d'une lumière laser réfléchie par une surface réfléchissant la lumière (131) de ladite partie réfléchissante (130), la lumière laser rayonnée étant réfléchie sur la surface réfléchissant la lumière (131) de manière qu'au moins une partie de la lumière laser soit conduite vers la partie de soudure (140).

13. Procédé selon la revendication 12, dans lequel au moins une partie de la partie réfléchissante (130) subit une fusion sous l'effet du laser de manière à s'intercaler entre la barre omnibus (120) et la partie de borne.
